(19) Europäisches Patentamt
European Patent Office
Office européen des brevets

(11) **EP 0 913 746 A2**

(12) **EUROPEAN PATENT APPLICATION**

(43) Date of publication:
06.05.1999 Bulletin 1999/18

(51) Int. Cl.$^6$: **G05B 9/03**

(21) Application number: 98120275.7

(22) Date of filing: 27.10.1998

(84) Designated Contracting States:
AT BE CH CY DE DK ES FI FR GB GR IE IT LI LU
MC NL PT SE
Designated Extension States:
AL LT LV MK RO SI

(30) Priority: 31.10.1997 US 961850

(71) Applicant: HONEYWELL INC.
Minneapolis Minnesota 55408 (US)

(72) Inventors:
• Gyde, Michael G.
Cave Creek, AZ 85331 (US)

• Davidson, Dale D.
Glendale, AZ 85303 (US)
• Stewart, Michael J.
Peoria, AZ 85381 (US)

(74) Representative:
Herzbach, Dieter, Dipl.-Ing.
Honeywell Holding AG,
Patent- und Lizenzabteilung,
Kaiserleistrasse 39
63067 Offenbach am Main (DE)

(54) **Sensor invalidation system**

(57)   A redundant sensor monitoring system tracks sensor miscomparisons and automatically reverts to valid sensors as required. Equivalent parameters (i.e. outputs)(30A,30B) of redundant sensors (11A,11B,11C) are compared. Out of tolerance comparisons are detected and input to a dynamic debounce routine (32). A debounce routine generates debounced parameter miscompare signals as a function of the magnitude and frequency of the miscomparisons. After the debounce step, all miscomparing parameters are considered invalid unless a parameter from another sensor confirms that one of the miscomparing parameters are valid. When one or more important parameters from a specific sensor are set invalid the entire sensor is set invalid. The debounce routine automatically clears each debounced parameter miscompare signal when the parameters cease to miscompare for a dynamically determined period. An autoreversion scheme is used to automatically deselect invalid sensors and revert to alternate sensors based on the sensor valid flag.

Fig. 1

**Description**

BACKGROUND OF INVENTION

The present invention relates generally to redundant systems and more specifically to automatic sensor invalidation detection and reversion for redundant sensors.

Redundant systems have a long history. Various types of redundant systems have long been used in many applications where a failure may result in a significant loss of time, money, or even lives.

Some redundant systems are very complex. The primary system often has multiple displays, sensors, actuators, processors, input devices, etc. The redundant or backup system may include redundant components for many, if not all, the elements of the primary system. There may even be multiple redundant systems. The complexity is more evident as components fail and are either manually or automatically replaced with the redundant components.

An example of such redundant systems are avionics systems for aircraft. These systems have displays for a pilot and copilot, processors for the various aircraft systems, input devices, actuators, and redundant devices for nearly every element. They also have numerous sensors which provide data used by the various systems and displays to safely control the aircraft. These include sensors such as air data sensors, inertial reference systems, navigation sensing systems, and the like. Aircraft often have at least two or even three of each type of sensor.

An important problem associated with redundant sensors is deciding which sensor to use. For example, if data from multiple sensors are inconsistent or miscompare with one another which sensor should be used? Or, should none of the sensors be used? How large of a miscomparison can be tolerated? How long can it be tolerated? How should an intermittent miscomparison be handled? What if a failed sensor suddenly appears to function properly? Should it be used? The problems are further complicated by the fact that most sensors output multiple parameters. It is complicated for a pilot to decide which parameters from which sensor to use when failures occur.

Current systems are deficient in many respects. They use only elementary techniques to determine sensor and parameter invalidity with little regard for the affect on overall system performance, reliability and availability. Typically they invalidate a parameter based either on a sensor generated parameter invalidity flag or on the basis of simple comparisons with other parameters which exceed a predetermined threshold.

Significant overall system improvement would be achieved by a sensor invalidation system which readily detects corrupt parameters and sensors, reduces the likelihood of unnecessarily invalidating parameters and sensors, and which improves sensor availability.

Clearly there exists the need for an improved sensor invalidation and reversion system which achieves improved sensor management and improved safety for redundant systems.

SUMMARY OF THE INVENTION

The invention discloses a redundant sensor monitoring system which hacks sensor miscomparisons and automatically reverts to valid sensors as required. First, equivalent parameters(i.e. outputs) of redundant sensors are compared and out of tolerance comparisons are detected. Next, a debounce routine generates debounced parameter miscompare signals as a function of the magnitude and frequency of parameter miscompares. If the debounce routine indicates two equivalent parameters miscomparing, both debounced parameter miscompare signals are set invalid. One of the miscomparing parameters can be reset to valid if another equivalent parameter from a third sensor compares with it. When one or more important parameters from a specific sensor are set invalid the entire sensor is set invalid. The debounce routine continues to track parameter miscomparisons and clears debounced parameter miscompare signals when parameters cease to miscompare for a dynamically determined period of time.

Finally, an autoreversion scheme is used to automatically deselect invalid sensors and revert to alternate sensors based on the sensor valid flags. The invention is described in more detail below.

The first step of comparing equivalent parameters requires that some terms be defined. Parameters refer to the outputs of sensors. Equivalent parameters refer to parameters which are representative of similar physical quantities. For example, static air pressure from two air data sensors are equivalent parameters. The miscompare detector routine includes customized predetermined tolerances to prevent insignificant miscomparisons being flagged as a miscompare. When a miscomparison occurs the magnitude of the miscomparison is measured for use in the next step of the invention. The miscomparison data from this step is referred to as raw parameter miscompare data.

Dynamically debouncing the raw parameter miscompare data is the second step of the invention. This step tracks the history of miscomparisons between parameters to provide improved decision making on when to set a debounced parameter miscompare flag. For example, if a pair of parameters has only one isolated miscomparison it is not necessarily indicative of a failure. Therefore the parameters can continue to be used and there is no need to set the debounced parameter miscompare flag. However, if the parameters have a history of miscomparisons one(or both) may be unsuitable for some uses such as closed loop control systems. In this case the debounced parameter miscompare flag would be set.

The dynamic debounce routine also tracks the magnitude of miscomparisons of the parameters. This provides additional data to improve decision making on when to set a parameter miscompare flag. For example, two parameters which have a history of numerous, yet small, miscomparisons may still be suitable for use. However, a parameter which has a history of only a few large miscomparisons may be unsuitable for use. The invention allows a blend of the frequency and magnitude of miscomparisons to be used in deciding to set a parameter miscompare flag.

The dynamic debounce routine similarly uses the history of parameter miscomparisons to decide when a debounced parameter miscomparison flag can be cleared. If a pair of parameters have a history of many large miscomparisons the debounce routine waits for many compare states prior to clearing the debounced parameter miscompare flag. On the other hand, if a pair of parameters have a history of few and/or small miscomparisons the debounce routine more quickly clears the debounced parameter miscompare flag.

This dynamic debounce scheme more accurately detects invalid parameters while also allowing marginal parameters to be used if they satisfy certain criteria. This improves the availability of sensors and thus the availability of the system.

The preferred embodiment of the dynamic debounce routine uses a formula which yields a sum that is continuously updated and is representative of the miscomparison history of pairs of parameters.

Of course, there remain other ways in which parameters and sensors are set invalid. These include parameter and sensor invalids which are set by the sensors themselves, freshness tests, reasonableness criteria, and the like. These tests work in conjunction with the miscompare testing described above. If a parameter or sensor is set invalid by one of these other tests, the debounce routine will not override that invalid flag.

Autoreversion is the third step of the invention. This step analyzes debounced parameter miscompare flags to determine which sensor or sensors to de-select and to determine which sensor or sensors to select (i.e. revert to). Predetermined autoreversion logic ensures that the best sensors are selected based on the state of the invalid flags. The invalid flags preferably encompass invalid flags from all sources such as the sensors themselves, the freshness testing, the reasonableness testing, and, of course, the parameter miscomparison testing.

One subtle aspect of the invention relates to setting entire sensors invalid. The preferred embodiment sets a sensor invalid when one or more important parameters from the sensor miscompare or are set invalid. This is considered useful since multiple outputs of a sensor are often related. Thus if one parameter from a sensor is bad it is likely that other parameters from the same sensor are also bad or soon will soon be bad. This also simplifies the autoreversion logic for the operator. Instead of a mixed selection of parameters from equivalent sensors from multiple equivalent sensors being presented on a display, one such equivalent sensor is selected to provide all the parameters. Therefore, one message on the display can notify the operator/pilot which sensor is providing the data.

The invention is particularly useful in systems having triple(or more) redundant sensors and in systems where availability is important.

Therefore, the object of the invention is to provide improved redundant sensor management.

A feature of the invention is a miscompare detector which detects not only miscomparisons but also the magnitude of the miscomparisons.

Another feature of the invention is a dynamic debounce routine which sets and resets miscompare flags as a function of the history of miscomparisons.

Another feature is the autoreversion function which automatically deselects invalid sensors and selects the proper sensors to use.

An advantage of the invention is improved sensor availability and consequently improved safety.

Another advantage is simplified operator interface.

Another advantage is sensor continuity.

Yet another advantage is enhanced sensor invalidity detection.

The significant features of the invention are illustrated in the figures and described more fully below.

BRIEF DESCRIPTION OF THE DRAWINGS

Figure 1 is a block diagram of the invention.
Figures 2A and 2B illustrate specific applications of the invention.
Figure 3 is a block diagram of the preferred embodiment of a miscompare detector and debounce.
Figure 4 graphically illustrates the preferred embodiment of the dynamic debounce.
Figure 5 shows the autoreversion logic adapted for use with aircraft primary flight displays.

DETAILED DESCRIPTION

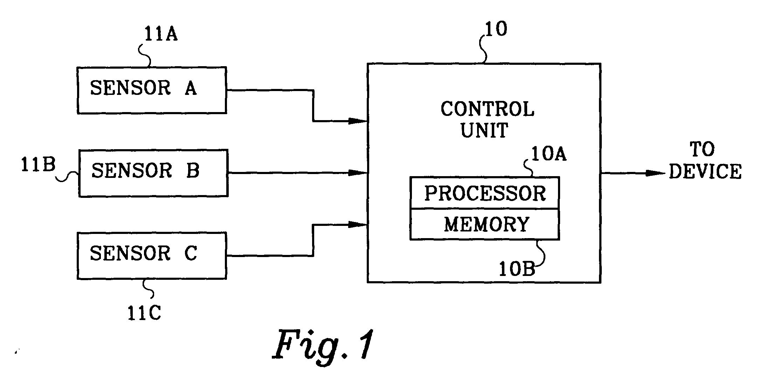

Figure 1 is a block diagram of the invention. Shown in figure 1 are control unit 10 and sensors 11. Sensors 11 provide at least one equivalent parameter which are communicated to control unit 10. For example, if sensors 11 are air data sensors they each provide several equivalent parameters such as static air pressure, air speed, air temperature, etc. The invention is useful for systems having two or more redundant sensors. However, it is particularly useful in systems with three or more redundant sensors as shown in figure 1.

Control unit 10 includes means for comparing equivalent parameters, dynamically debouncing the raw miscompare data, and implementing the autoreversion logic. In the preferred embodiment control unit 10 includes a processor 10A and memory 10B which accomplish these tasks. Those skilled in the art understand that some of these functions can be implemented in other ways such as hardware circuits, multiple processors, and the like. Control unit 10 either uses the results itself or communicates the results to other devices which operate on the results. In alternate embodiments control unit 10 itself operates on the sensor data then communicates data or commands to other devices. The devices can be virtually any type of actuator, display, controller, or the like. Some examples are illustrated below.

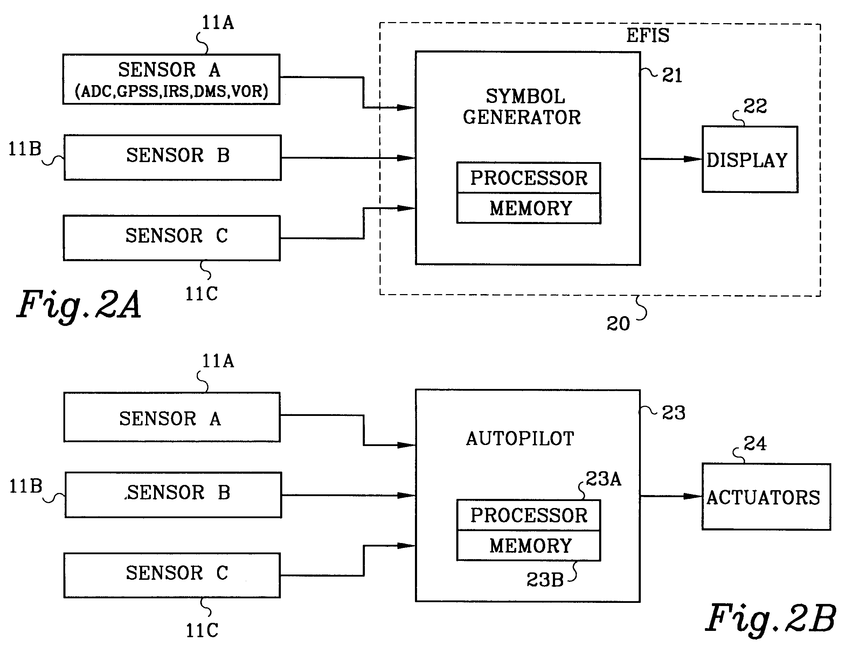

Figures 2A and 2B illustrate specific embodiments of the invention. Figure 2A shows the invention embodied as part of an EFIS(electronic flight instrument system). Shown in figure 2A are EFIS 20, symbol generator 21, display 22, and sensors 11.

Sensors 11 may include a variety of sensor types. In an aircraft EFIS system sensors 11 may include air data computers, global positioning sensor systems(GPSS), inertial reference systems(IRS), distance measuring equipment(DME), VOR, and others. Parameters from sensors 11 are communicated to symbol generator 21. Symbol generator 21 performs the functions of control unit 10 above. Symbol generator 21 compares equivalent parameters, dynamically debounces the miscomparisons, and uses predetermined autoreversion logic to decide which of the equivalent parameters to use.

In the preferred embodiment for an electronic display system(e.g. EFIS), if a parameter is determined to be bad, the entire sensor which generated the parameter is set invalid and the display system reverts to another sensor. This scheme simplifies pilot workload by maintaining consistency on the display. Only one message is required to notify the pilot that a different sensor is now being used. This whole-sensor invalidation approach is supported by the assumption that sensor outputs are closely interrelated. If one output is corrupt there is a high probability that other outputs will also soon be corrupt.

Symbol generator 21 includes processor 21A and memory 21B. Symbol generator 21 selects the appropriate sensor according to the autoreversion logic and communicates the parameters and pilot notifications to display 22.

Figure 2B shows the invention embodied as part of an autopilot. Figure 2B shows sensors 11, autopilot 23, and actuators 24. Sensors 11 are similar to the sensors in figure 2A. Parameters from sensors 11 are communicated to autopilot 23. Autopilot 23 includes processor 23A and memory 23B. Autopilot 23 functions as control unit 10 described above. Autopilot 23 compares equivalent parameters, dynamically debounces the miscomparisons, and selects which parameters to use according to predetermined autoreversion logic. Autopilot 23 uses the parameters in conventional autopilot control algorithms to yield commands which are transmitted to the various actuators associated with the control surfaces of the aircraft.

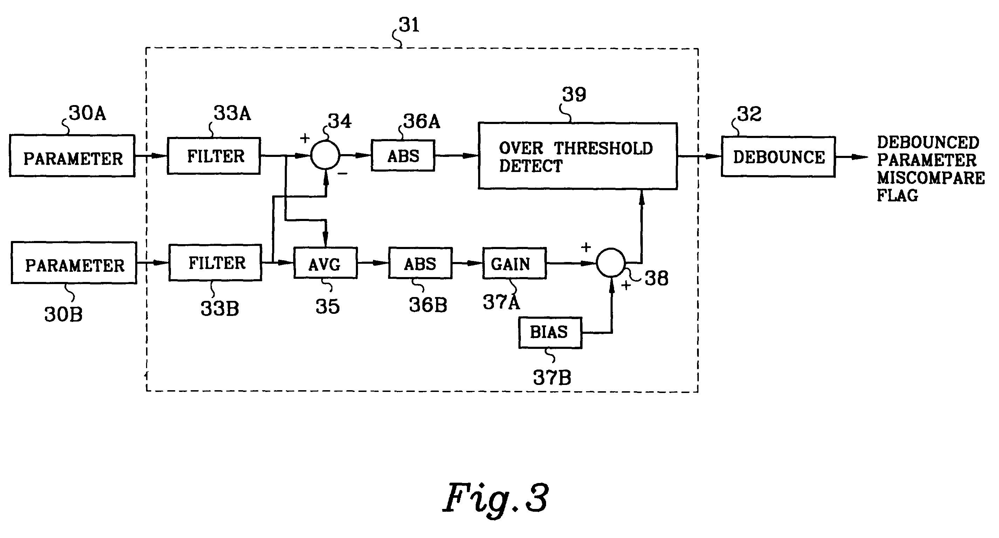

Figure 3 is block diagram of the preferred embodiment of a miscompare detector and debounce. Shown in figure 3 are sensor parameters 30, miscompare detector 31 and debounce 32. A typical miscompare detector as known in the prior art merely compares two parameters and yields a binary indication of either a compare or miscompare status. The invention uses an improved miscompare detector which also yields an indication of the magnitude of the miscomparison.

Miscompare detector 31 includes filters 33, difference device 34, averaging device 35, absolute value devices 36, gain 37A, bias 37B, summing device 38, and threshold detector 39. Equivalent parameters 30 are input into filters. Filters 33 are conventional low pass filters to eliminate noise. Filtered parameter signals from both filters 33 are averaged by averaging device to yield an average signal. Similarly, both filtered parameter signals are input to difference device 34 to yield a difference signal indicative of the difference between the two signals.

The output of difference device 34 is input to absolute value device 36A which communicates the absolute value of the difference between the parameters 30 to threshold detector 39.

The average of parameters 30 is communicated from average device 35 to absolute value device 36B. The absolute value of the average of parameters 30 is communicated from absolute value device 36B to gain 37A. The outputs of gain 37A and bias 37B are summed together by summing device 38. Gain 37A and bias 37B allow miscompare detector 31 to be adapted for different criteria and parameters as desired for specific applications. For example, an autopilot may have strict criteria while an EFIS may have more relaxed criteria for the same parameter. Gain 37A scales the absolute value of the average of parameters 11. Bias 37B provides an offset which is summed with output of gain 37A. The output of summing device 38 is the threshold and is communicated to threshold detector 39.

Threshold detector 39 compares the output of absolute value device 36A with the threshold signal from summing device 38. The output of detector 39 is a raw parameter miscompare signal indicating if the threshold has been exceeded and the magnitude of the miscompare. This signal is communicated to the dynamic debounce routine 32.

Dynamic debounce routine 32 uses the raw parameter miscompare signal along with predetermined debounce criteria for the specific parameter to generate a debounced parameter miscompare flag/signal. This flag is used in the autoreversion logic described below.

Dynamic debounce routine 32 tracks the history of raw parameter miscompares which are used to compute when to set debounced parameter miscompare flags. Debounce routine 32 factors in both the frequency and magnitude of miscomparisons in its computations. For a typical parameter, a several small raw miscomparisons will not cause the debounced miscompare flag to be set. Similarly, a large isolated miscomparison will not cause the miscomparison flag to be set. However, once the frequency and/or magnitude of miscomparisons become sufficiently large, the debounce routine sets the debounced miscompare flag.

Once the debounced miscompare flag is set, the debounce routine continues to track the history of raw miscomparisons. It is generally undesirable to have the debounce routine frequently toggle a debounced miscompare flag. Also, it is generally not desired to reset a miscompare flag immediately upon the occurrence of raw miscompare signal indicating no miscompare. The debounce routine solves these problems by setting criteria which must be satisfied prior to resetting a debounced miscompare flag. A parameter must remain in a compare state for a dynamically determined period of time before the debounced miscompare flag is reset. This dynamic period of time is a function of the history of raw miscompares. For example, a history of frequent and/or large raw miscomparisons requires a longer period of no raw miscomparisons before the debounced miscompare flag is reset. Conversely, a history of infrequent and/or small magnitude raw miscomparisons may require a shorter period of no raw miscomparisons before the debounced miscompare flag is reset.

The preferred embodiment uses an algorithm which generates a sum which is representative of the history of raw miscomparisons between each pair of equivalent parameters. Sixteen bit arithmetic is used. The sum is:

$$\Sigma\ steps = K * \text{magnitude of miscompare}$$

Where,

$$K = \frac{\text{max. parameter value * threshold}}{\text{magnitude of miscompare * \# of loops at miscompare}}$$

K is defined for each parameter such that a given fixed magnitude of miscompare will cause the debounced miscompare flag to be set in a fixed time.

For example, for a 20 degree miscompare in pitch angle which is updated at 40 Hz, if it is desired to set the debounced miscompare flag in .25 seconds, K is computed as follows:

$$K = \frac{90*16384}{20*10}$$

(16384 is 1/2 scale in a 16 bit word)

For the pitch angle parameter, gain is zero and the bias is 6 degrees in the preferred embodiment, for use with an EFIS. Once the raw miscompare flag is set, the sum begins to count.

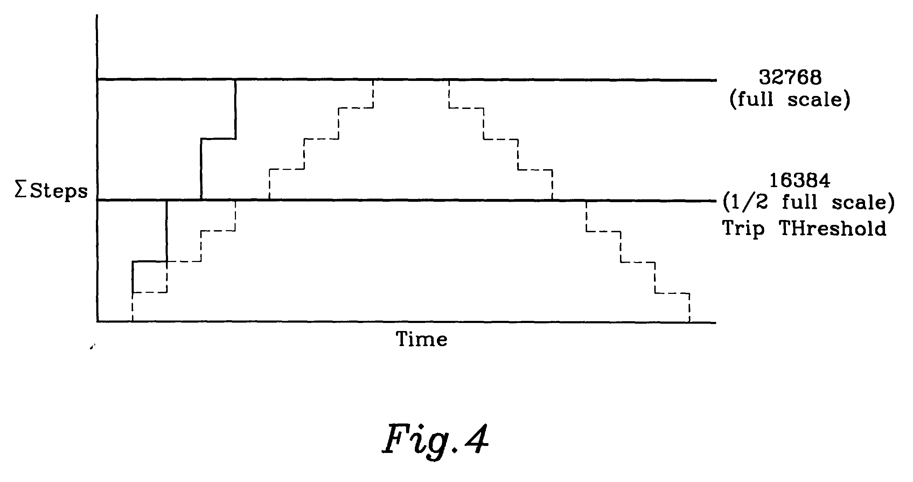

Figure 4 illustrates this idea. In figure 4 the dash steps 41 represent a constant magnitude miscompare (x) and the solid steps 42 represent a constant magnitude miscompare (2x) for an given K. It is apparent that the amount of time to reach the 1/2 full scale value for the larger magnitude miscompare is twice as fast as the smaller miscompare.

The formula for determining debounce times for specific magnitude miscompare is as follows:

$$T = \frac{\text{counter threshold * update rate}}{\text{magnitude of miscompare * K}}$$

For example, if there exists a constant magnitude of miscompare in pitch angle of 6.1 degrees(just over the threshold), then the time required to set the debounced miscompare flag is:

$$T = \frac{16384*0.025}{6.1*K}$$

The significance of constant magnitude miscompare for determining these times should be noted. If the magnitude increases, then the debounce time will decrease and vice versa.

The down count(as illustrated in figure 4) is preferably a constant equal to the minimum miscompare thresholds up count. In other words, the down count is as slow as the slowest up count. Therefore, both large and small magnitude miscompares have the same debounce off time if the sum of the counts is saturated at full scale. Similarly, it is possible for a debounced miscompare flag to be set for only one count over the threshold and then the raw miscompare signal to revert to a compare state. In this case, if the magnitude was small, the debounce off time could be equal to only one or two counts only.

The final step of the invention is the autoreversion process. In this step the invention deselects sensors not to be used and automatically reverts to use a different sensor if needed. Two variables are typically used in this step. The variables are the debounced parameter miscompare flags and the sensor(or parameter) valids. The flags and valids are used in conjunction with predetermined reversion logic to make desired reversion decisions. Those skilled in the art recognize invention can also be adapted to deselect parameters instead of whole-sensors if desired. Also, it is understood that the preferred embodiment implements the miscompare detector, debounce routine, and autoreversion logic in software. However, other embodiments are possible.

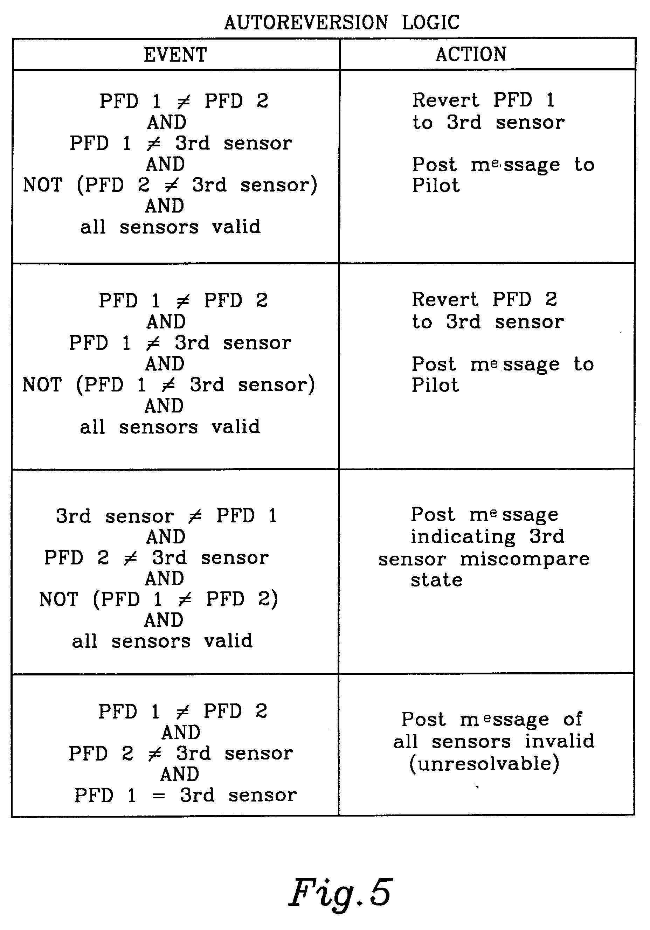

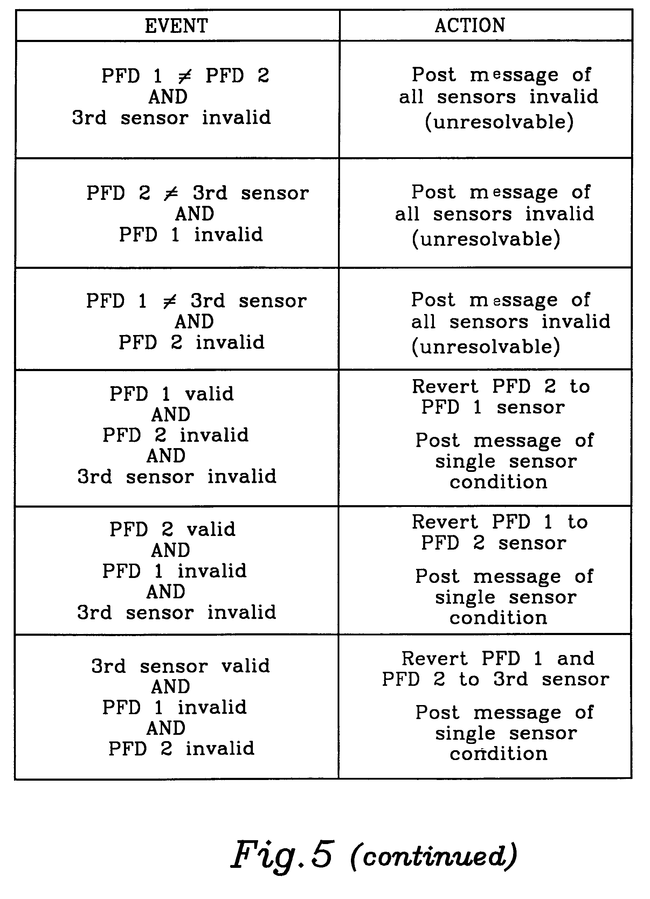

Figure 5 illustrates predetermined autoreversion logic for two primary flight displays(PFDs) in an aircraft cockpit. There are three sensors providing equivalent parameters. Initially one sensor's data is displayed on PFD 1, another sensor's data is displayed on PFD 2, and the third sensor is redundant(its' data is not displayed). For convenience, in figure 4, PFD 1 refers to the sensor initially associated with PFD 1, PFD 2 refers to the sensor initially associated with PFD 2, and "3rd sensor" refers to the redundant sensor. The "≠" represents a miscompare between sensors. When the conditions under the EVENT column are met, then the actions listed under the ACTION column are taken.

The method of the invention follows from the above description. Equivalent parameters from at least two sensors are compared, the magnitude of miscomparison between the equivalent parameters is detected, and a signal representative thereof is generated. The signal is dynamically debounced. Finally, sensors are deselected as a function of the debounced parameter miscomparison signal and predetermined autoreversion logic.

This description has been for descriptive purposes only and is not intended to limit the scope of the invention. Those skilled in the art will recognize numerous alternate embodiments of the invention which deviate from the described embodiment but still perform the same work in substantially the same way to achieve substantially the same result and are therefore equivalent to the invention.

It is clear from the foregoing that the present invention represents a new and useful method and apparatus for managing redundant sensors.

## Claims

1. A multi-sensor validation system in which equivalent parameters from at least two sensors (11A, 11B, 11C) are compared, said system comprising:

   a control unit (10) in communication with said sensors, said control unit generating at least one debounced miscompare signal as a function of the magnitude and duration of miscomparisons between at least two of said equivalent parameters.

2. The multi-sensor validation system according to claim 1 wherein said control unit (10) deselects at least one of said parameters, said deselection being a function of said at least one debounced miscompare signals and predetermined autoreversion logic.

3. The multi-sensor validation system according to claim 1 wherein each of said debounced miscompare signals is characterized such that as the magnitude of miscomparison between said equivalent parameters increases the time period for setting the debounced miscompare signal to a miscompare state decreases.

4. The multi-sensor validation system according to claim 3 wherein each of said debounced miscompare signals is characterized such that as the magnitude of miscomparison between said at least two equivalent parameters decreases the time period for setting the debounced miscompare signal to a miscompare state increases.

5. The multi-sensor validation system according to claim 1 wherein each of said debounced miscompare signals is characterized such that resetting the signal from a miscompare state to a compare state is a function of the magnitude and duration of prior miscomparisons between said equivalent parameters.

6. The multi-sensor validation system according to claim 1 wherein said control unit (10) deselects one of said sensors from providing parameter data, said deselection a function of said at least one debounced miscompare signals and predetermined autoreversion logic.

7. A multi-sensor validation system in which equivalent parameters from at least two sensors are evaluated, said management system comprising:

   a) control means for deselecting at least one of said sensors as a provider of data, said control means including,

      1) compare means for comparing at least two of said equivalent parameters and generating a raw parameter miscompare signal indicative of the magnitude of miscomparison between said equivalent parameters,
      2) debounce means for generating a debounced parameter miscompare signal as a function of said raw parameter miscompare signal, and,
      3) autoreversion means for deselecting one of said sensors as a provider of data, said deselecting being a function of said debounced parameter miscompare signal and predetermined autoreversion logic.

8. The sensor validation detection system according to claim 7 wherein said debounce means generates said debounced parameter compare signal as a function of the history of said raw parameter miscompare signals for said equivalent parameters.

9. The sensor validation detection system according to claim 8 wherein said debounce means generates said debounced miscompare signals as a function of the magnitude and frequency of miscomparison between said equivalent parameters.

10. The sensor validation detection system according to claim 9 wherein said debounced parameter miscompare signal is characterized in that as the magnitude of miscomparisons increase, the debounced parameter miscompare signal is set to a miscompare state in a shorter time period and as the magnitude of miscomparisons decreases, the debounced parameter miscompare signal is set to a miscompare state after a longer time period.

11. The sensor validation detection system according to claim 10 wherein said debounced parameter miscompare signal is characterized in that as the frequency of miscomparisons increase, the debounced parameter miscompare signal is set to a miscompare state in a shorter time period and as the frequency of miscomparisons decreases, the debounced parameter miscompare signal is set to a miscompare state after a longer time period.

12. The sensor validation detection system according to claim 9 wherein said debounced parameter miscompare signal is characterized in that the debounced parameter miscompare signal is reset from a miscompare state to a compare state as a function of the magnitude and frequency of prior raw parameter miscompare signals.

*Fig. 1*

EP 0 913 746 A2

Fig.2A

Fig.2B

EP 0 913 746 A2

*Fig.3*

EP 0 913 746 A2

*Fig. 4*

EP 0 913 746 A2

AUTOREVERSION LOGIC

| EVENT | ACTION |
|---|---|
| PFD 1 ≠ PFD 2<br>AND<br>PFD 1 ≠ 3rd sensor<br>AND<br>NOT (PFD 2 ≠ 3rd sensor)<br>AND<br>all sensors valid | Revert PFD 1<br>to 3rd sensor<br><br>Post message to<br>Pilot |
| PFD 1 ≠ PFD 2<br>AND<br>PFD 1 ≠ 3rd sensor<br>AND<br>NOT (PFD 1 ≠ 3rd sensor)<br>AND<br>all sensors valid | Revert PFD 2<br>to 3rd sensor<br><br>Post message to<br>Pilot |
| 3rd sensor ≠ PFD 1<br>AND<br>PFD 2 ≠ 3rd sensor<br>AND<br>NOT (PFD 1 ≠ PFD 2)<br>AND<br>all sensors valid | Post message<br>indicating 3rd<br>sensor miscompare<br>state |
| PFD 1 ≠ PFD 2<br>AND<br>PFD 2 ≠ 3rd sensor<br>AND<br>PFD 1 = 3rd sensor | Post message of<br>all sensors invalid<br>(unresolvable) |

*Fig.5*

12

| EVENT | ACTION |
|---|---|
| PFD 1 ≠ PFD 2<br>AND<br>3rd sensor invalid | Post message of<br>all sensors invalid<br>(unresolvable) |
| PFD 2 ≠ 3rd sensor<br>AND<br>PFD 1 invalid | Post message of<br>all sensors invalid<br>(unresolvable) |
| PFD 1 ≠ 3rd sensor<br>AND<br>PFD 2 invalid | Post message of<br>all sensors invalid<br>(unresolvable) |
| PFD 1 valid<br>AND<br>PFD 2 invalid<br>AND<br>3rd sensor invalid | Revert PFD 2 to<br>PFD 1 sensor<br><br>Post message of<br>single sensor<br>condition |
| PFD 2 valid<br>AND<br>PFD 1 invalid<br>AND<br>3rd sensor invalid | Revert PFD 1 to<br>PFD 2 sensor<br><br>Post message of<br>single sensor<br>condition |
| 3rd sensor valid<br>AND<br>PFD 1 invalid<br>AND<br>PFD 2 invalid | Revert PFD 1 and<br>PFD 2 to 3rd sensor<br><br>Post message of<br>single sensor<br>condition |

# Fig. 5 (continued)